# EUROPEAN PATENT APPLICATION

(11) **EP 1 724 237 A1**
(43) Date of publication of application: **22.11.2006**
(21) Application number: 05104226.5
(22) Date of filing: 19.05.2005
(51) Int. Cl.: C01B 15/043, C01B 15/047

(54) **Particles of metal peroxide with increased particle size, process for their preparation and their use**

(71) Applicant: SOLVAY (Société Anonyme), 1050 Bruxelles (BE)
(72) Inventor: Dötsch, Werner, 53545, Linz Am Rhein (DE); Buchholz, Ernst, 53560, Vettelschloss (DE); Thurat, Sascha, 56598, Rheinbrohl (DE)
(74) Representative: Jacques, Philippe

(57) **Abstract**

Particles containing a metal peroxide in which the metal is chosen from the groups IIa and IIb of the periodic table and in which at least 50 % by weight of the particles have a diameter higher than 20 µm.

Process for the preparation of such particles comprising :
(a) mixing at least one metal oxide or hydroxide, the metal being chosen from the groups IIa and IIb of the periodic table, in the form of an aqueous solution, a suspension or a solid, with an aqueous hydrogen peroxide solution,
(b) allowing the metal oxide or hydroxide to react with hydrogen peroxide to form a suspension of the corresponding peroxide,
(c) adding to this suspension at least one additive chosen from starch or a compound derived from starch, and
(d) drying the resulting peroxide suspension.

## Description

The present invention is related to particles of metal peroxide, especially calcium peroxide, magnesium peroxide, zinc peroxide or mixed calcium/magnesium peroxide, with improved properties, especially increased particle size. It is also related to a process for the preparation of these particles and to their use.

Metal peroxides are known. The British patent application GB 2048842 for instance discloses the preparation of alkali metal or alkaline earth metal peroxides by forming a mixture of a concentrated aqueous alkali metal or alkaline earth metal oxide or hydroxide suspension and an aqueous hydrogen peroxide solution, allowing the oxide or hydroxide to react with hydrogen peroxide to form the corresponding peroxide and spray drying the resulting peroxide suspension. In example 1, a calcium peroxide is obtained with an average grain size diameter of 5 µm and 90 % of the particles have a diameter between 2 and 7 µm.

Due to its small particle size, this known product is poor in free flow behavior, contains a large amount of dust, and is sticky, which makes it difficult to handle.

The aim of the present invention is to overcome these drawbacks by providing new metal peroxide particles which are free flowing, dustfree and non-sticky.

To this end, the present invention is related to particles containing at least one metal peroxide in which the metal is chosen from the groups IIa and IIb of the periodic table and in which at least 50 % by weight of the particles have a diameter higher than 20 µm. The content of particles having a diameter higher than 20 µm is preferably at least 60 % by weight, in particular at least 70 % by weight, values of at least 80 % by weight being advantageous and those of at least 90 % by weight being the most preferred. The content of particles having a diameter higher than 20 µm is measured by sieve analysis.

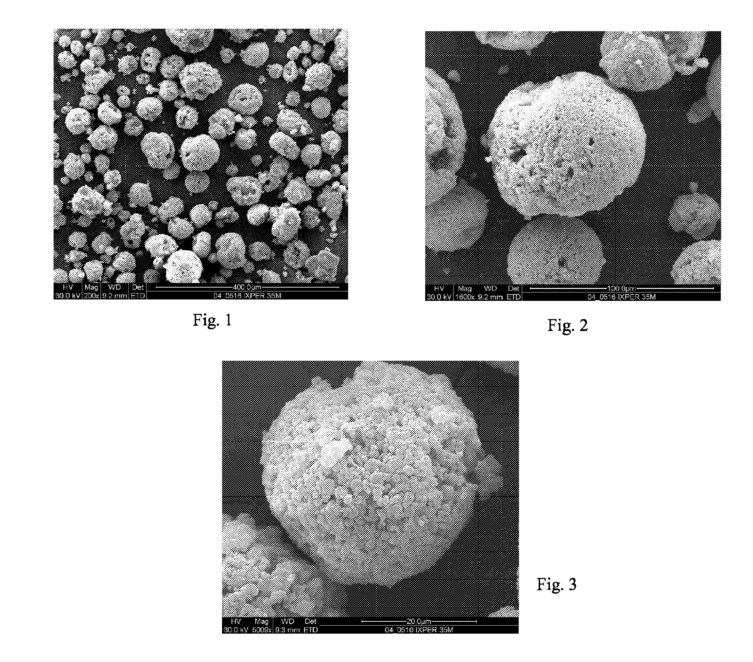

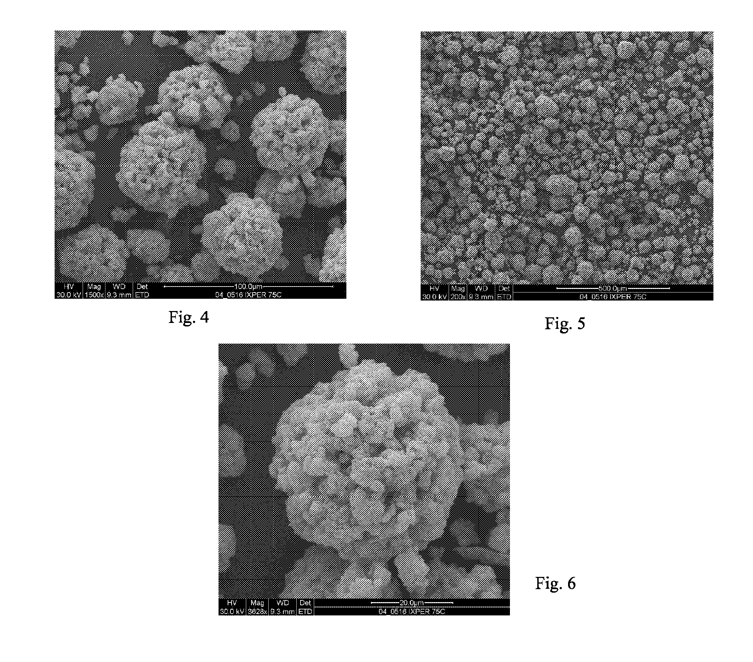

One of the essential features of the invention resides in the increased particle size of the particles. Figures 1 to 6 show typical pictures made with Scanning Electron Microscopy. Figures 1 to 3 are related to the same magnesium peroxide, and figures 3 to 6 are related to the same calcium peroxide.

Due to the increased particle size, the particles of the invention present the advantages of containing a small amount of fines which makes the product dustfree and thus non-sticky and easy to handle.

The increased particle size and the low amount of fines renders the particles of the invention also free flowing. The flow behavior is expressed as the time necessary for 100 g of particles to flow out of a plastic funnel with the following size :

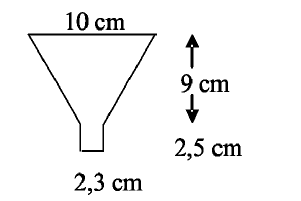

The flow behavior of the particles of the invention is improved compared to known metal peroxides, the flow behavior of which can typically go up to 20 s. The flow behavior of the particles of the invention is in general equal to or smaller than 8 s, especially equal to or smaller than 7 s, values equal to or smaller than 6 s are the most preferred.

The particles of the invention can be obtained by using an additive during the preparation as explained below which favors agglomeration so that large granules are formed. This additive can be chosen from starch and compounds derived from starch. The term starch denotes a natural product (for instance found in seeds, fruits, tubers, roots and stem pith of plants, notably in corn, potatoes, wheat and rice) which is a polysaccharide made up of glucose units that has alpha-1,4-glycoside linkages. It commonly corresponds to the formula [(C₆H₁₀O₅)ₙ]ₚ in which n and p can be such that the molecular weight of the starch is at least 10000. It is usually in the form of a white, tasteless, odorless, granular or powdery solid. The expression "compounds derived from starch" denotes any product that has been obtained by modifying starch chemically or physically. Examples of suitable compounds derived from starch are the products called UNI-PURE ™ LQ and National 77-1760 from the National Starch & Chemical Company.

Generally, the additive chosen from starch and compounds derived from starch is present in the particles of the invention in an amount equal to or higher than 2 % by weight, in particular equal to or higher than 3 % by weight, values equal to or higher than 4 % by weight being the most preferred The amount of additive in the particles of the invention is most often equal to or smaller than 10 % by weight, especially equal to or smaller than 8 % by weight, values equal to or smaller than 6 % by weight giving satisfactory results. Additive amounts of at least 2 % by weight and at most 10 % by weight are suitable.

The metal in the particles of the invention is chosen from the groups IIa and IIb of the periodic table. Amongst those of group IIa, magnesium, calcium and strontium are preferred, especially calcium and magnesium. Amongst those of group IIb, zinc is preferred. The metal is advantageously chosen from calcium, magnesium, zinc and mixtures thereof.

The metal peroxide in the particles of the invention is preferably chosen from magnesium peroxide, calcium peroxide, zinc peroxide, mixed calcium/magnesium peroxides such as those disclosed in the United States patent US 6283495 of SOLVAY INTEROX GmbH, and mixtures of at least two of these compounds.

The particles of the invention contain the metal peroxide in an amount which is usually equal to or higher than 25 % by weight, in particular equal to or higher than 55 % by weight. The amount of metal peroxide in the particles is most often equal to or smaller than 80 % by weight, especially equal to or smaller than 70 % by weight. The remainder is usually the corresponding metal oxide or hydroxide and/or the corresponding metal carbonate.

The particles of the invention can be prepared by any adequate process provided that the process leads to a content of particles having a diameter higher than 20 µm of at least 50 % by weight.

A particularly suitable process comprises
(a) mixing at least one metal oxide or hydroxide, the metal being chosen from the groups IIa and IIb of the periodic table, in the form of an aqueous solution, a suspension or a solid, with an aqueous hydrogen peroxide solution,
(b) allowing the metal oxide or hydroxide to react with hydrogen peroxide to form a suspension of the corresponding peroxide,
(c) adding to this suspension at least one additive chosen from starch or a compound derived from starch, and
(d) drying the resulting peroxide suspension in order to obtain particles of the peroxide.

The present invention therefore also concerns this process for the preparation of the above-described particles.

Step (a) of this process can be carried out by using the metal oxide or hydroxide in the form of an aqueous solution, a suspension or a solid. When it is used in solid form, it can be carried out as in the process described in the examples of US 6547490 of SOLVAY INTEROX GmbH. Step (a) is preferably carried out by using the metal oxide or hydroxide in the form of a suspension. In this case, the oxide or hydroxide suspension should have a high solids concentration, preferably so high that the suspension is still just pumpable. The solids concentration of this suspension is generally adjusted according to the oxide or hydroxide to be used and is preferably equal to or higher than 200 g/l, in particular equal to or higher than 300 g/l. The solids content is often at most 600 g/l and especially at most 500 g/l. Solids contents from 350 to 450 g/l are suitable. Aqueous suspensions are preferred.

The oxide or hydroxide suspension can be prepared for example by simultaneously metering water and the oxide or hydroxide powder into a reaction vessel, with stirring.

The hydrogen peroxide solution to be used in the process of the invention may be any known product. It may also contain known active oxygen stabilizers. It is advisable to select a hydrogen peroxide concentration equal to or greater than 30 % by weight and preferably equal to or greater than 70 % by weight so that the reaction medium does not become too strongly diluted. Hydrogen peroxide concentrations from 45 to 65 % by weight give good results.

The molar ratio of (oxide or hydroxide) : hydrogen peroxide used in step (a) of the process of the invention can vary from 0.9:1 to 1.1:1. By using approximately stoichiometric quantities of reactants and operating with a concentrated reaction mixture, the proportion of ballast to be incorporated (for example water, excess reactants, etc) can be kept extremely low.

During step (b) the mixture of step (a) is maintained, preferably with mixing and/or with cooling, until the reaction is complete or until the optimum conversion is achieved. This can be done in any suitable device capable of giving intensive mixing. The device can be chosen from kneading devices, such as a conical screw mixer, or from rapidly rotating eccentric pumps, such as a can impeller mixer.

During step (b), the temperature can raise spontaneously due to the exothermic character of the reaction. It can then be necessary to cool down the temperature of the mixture. Cooling can be done by using a cooling jacket or cooling coils or an external cooler. The external cooler is preferred. Cooling is generally carried out to maintain the temperature from 20 to 60 °C, in particular from 25 to 50 °C, most preferably from 30 to 40 °C.

The duration of step (b) can go from 5 min to 3 h.

During step (c) the additive is added to the suspension obtained in step (b). The additive can be added in solid form or in the form of a suspension. The suspension is preferred. Aqueous suspensions are suitable. The nature and the amount of the additive are described above. It can be advantageous to stir the mixture during step (c) in order to homogeneously disperse the additive into the suspension. During step (c) cooling can be performed as described before.

After step (c) it can be advantageous to remove a part of the water content from the reaction mixture, preferably to a water content of not more than about 40 % by weight, suitably in a centrifuge. The thick peroxide suspension or paste resulting from the reaction may be transported by means of a screw pump to the device in which step (d) is carried out.

Step (d) of the process of the invention can be carried out in any suitable drying equipment. It is preferably carried out in a spray drier, for example in a spray drier with a rapidly rotating disc. The rotating speed of the rotating disc generally influences the size of the particles in that lower speeds lead to higher particle sizes. Generally the spray drier is operated at an inlet temperature of from 250 to 600 °C and an outlet temperature from 110 to 140 °C.

The process of the invention can be carried out either on a continuous or on discontinuous basis.

The particles of the invention can be used as an oxygen release agent or as an oxidizing agent. They give good results as an oxygen release agent in the in situ bioremediation of soil. They also give satisfactory results as oxidizing agents in oil drilling or in toothpaste. The present invention is therefore also related to these uses.

### Examples 1-3

In the reference example 1, standard calcium peroxide was prepared according to the above process with steps (a) to (d) but without adding an additive, and its flow behavior was measured according to the method described before.

In examples 2 and 3 according to the invention, all the operations of example 1 were repeated except that an additive was used. In example 2, the commercial starch UNI-PURE™ LQ was used in an amount of 3 % by weight. In example 3, the commercial starch National 77-1760 was used in an amount of 5 % by weight.

The results of flow behavior are shown in the following table.

| **Example** | **Additive** | **Flow behavior** |
|---|---|---|
| 1 | None | 17 s |
| 2 | 3 % by weight of UNI-PURE™ LQ | 5.3 s |
| 3 | 5 % by weight of National 77-1760 | 2.5 s |

## Claims

1. Particles containing a metal peroxide in which the metal is chosen from the groups IIa and IIb of the periodic table, **characterized in that** at least 50 % by weight of the particles have a diameter higher than 20 µm.

2. Particles according to claim 1, **characterized in that** at least 75 and at most 95 % by weight of the particles have a diameter higher than 20 µm.

3. Particles according to claim 1 or 2, **characterized in that** they have an improved flow behavior of at most 8 s measured according to the method herein described.

4. Particles according to any one of claims 1 to 3, **characterized in that** they contain at least one additive chosen from starch and compounds derived from starch.

5. Particles according to claim 4 containing the additive in an amount of at least 2 % by weight and at most 10 % by weight.

6. Particles according to any one of claims 1 to 5 in which the metal peroxide is chosen from magnesium peroxide, calcium peroxide, zinc peroxide, mixed calcium/magnesium peroxides and mixtures of at least two of these compounds.

7. Process for the preparation of the particles of any one of claims 1 to 6 comprising :
(a) mixing at least one metal oxide or hydroxide, the metal being chosen from the groups IIa and IIb of the periodic table, in the form of an aqueous solution, a suspension or a solid, with an aqueous hydrogen peroxide solution,
(b) allowing the metal oxide or hydroxide to react with hydrogen peroxide to form a suspension of the corresponding peroxide,
(c) adding to this suspension at least one additive chosen from starch or a compound derived from starch, and
(d) drying the resulting peroxide suspension.

8. Process according to claim 7 in which the reaction heat of step (b) is evacuated by cooling and the drying in step (d) is carried out in a spray dryer having an outlet air temperature between 110 and 140 °C.

9. Use of the particles of any one of claims 1 to 6 as an oxygen release agent or as an oxidizing agent.

10. Use according to claim 9 in the in situ bioremediation of soil, in oil drilling or in toothpaste.
